(19) Europäisches Patentamt
European Patent Office
Office européen des brevets

(11) Veröffentlichungsnummer: **0 419 979 B1**

(12) **EUROPÄISCHE PATENTSCHRIFT**

(45) Veröffentlichungstag der Patentschrift: **07.06.95**

(51) Int. Cl.$^{6}$: **C09D 5/44**, C08G 61/12, H01B 1/12

(21) Anmeldenummer: **90117787.3**

(22) Anmeldetag: **15.09.90**

# (54) Verfahren zur Herstellung elektrisch leitfähiger Polyheteroaromaten.

(30) Priorität: **28.09.89 DE 3932326**

(43) Veröffentlichungstag der Anmeldung:
**03.04.91 Patentblatt 91/14**

(45) Bekanntmachung des Hinweises auf die Patenterteilung:
**07.06.95 Patentblatt 95/23**

(84) Benannte Vertragsstaaten:
**DE FR GB IT NL**

(56) Entgegenhaltungen:
**EP-A- 0 339 341**
**DE-A- 3 318 857**
**DE-A- 3 338 906**

(73) Patentinhaber: **BAYER AG**

**D-51368 Leverkusen (DE)**

(72) Erfinder: **Claussen, Uwe, Dr.**
**Am Wasserturm 15b**
**D-5090 Leverkusen 3 (DE)**
Erfinder: **Herrmann, Udo, Dr.**
**Melanderstrasse 13**
**D-4047 Dormagen 5 (DE)**

EP 0 419 979 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein neues Verfahren zur Herstellung elektrisch leitfähiger Polyheteroaromaten durch elektrochemische Oxidation von oxidativ polymerisierbaren monomeren heteroaromatischen Verbindungen und die nach diesem Verfahren erhaltenen Polyheteroaromaten.

Es ist bereits bekannt, oxidativ polymerisierbare monomere heteroaromatische Verbindungen wie Pyrrol elektrochemisch zu elektrisch leitfähigen Polyheteroaromaten, z.B. zu Polypyrrol, zu oxidieren (siehe z.B. J. C. S. Chem. Comm. 1979, Seiten 635 und 854 oder DE-OS 30 49 551).

Ferner ist bekannt, daß die Qualität, z.B. die Oberflächenbeschaffenheit, und die physikalischen Eigenschaften, insbesondere die Leitfähigkeit aber auch die mechanische Festigkeit, der durch elektrochemische Oxidation erhaltenen Polymere stark von den bei der Oxidation angewandten Bedingungen abhängen (siehe z.B. J. Electrochem. Soc. 134 (1) 101-105 (1987)). Deshalb wurden bereits die verschiedensten Bedingungen für die elektrochemische Oxidation untersucht und beschrieben.

So wurden für die Oxidation folgende Systeme vorgeschlagen:

a) Leitfähigkeitssalze enthaltende Lösungen der monomeren heteroaromatischen Verbindungen in organischen Lösungsmitteln (siehe z.B. EP-A-0 055 358 und die in dieser zitierten Veröffentlichungen);

b) Leitfähigkeitssalze enthaltende Lösungen der Monomere in wasserhaltigen organischen Lösungsmitteln (siehe z.B. US-PS 3 574 072);

c) Leitfähigkeitssalze und Tenside enthaltende wäßrige Lösungen der Monomere (siehe J. Electrochem. Soc. Loc. cit.; Macromol. Chem. Rapid Comm. 5, 157-164 (1984); Mol. Cryst. Liqu. Cryst. 1985, Vol. 118, 193-197; Jap. J. Appl. Phys. Part 2, (1985), 24 (6) 423-424 (referiert in CA 103: 88 486s); FR-A-2 556 137);

d) Leitfähigkeitssalze und Tenside und gegebenenfalls mit Wasser mischbare organische Lösungsmittel enthaltende wäßrige Dispersionen der Monomere (siehe EP-A-0 129 070); und

e) Leitfähigkeitssalze, Tenside, organische mit Wasser mischbare Lösungsmittel und aliphatische Kohlenwasserstoffe enthaltende wäßrige Dispersionen (siehe Jap. Pat. Anm. 87/93 863 (referiert in CA 107: 26 112r)).

f) Wäßrige Systeme, die aromatische Sulfonsäuren oder deren Salze und ggf. ein organisches Lösungsmittel enthalten (DE 33 18 857).

g) Aprotische Lösungsmittel mit Leitfähigkeitssalzen und einer geringen Menge an Polyether bzw. Polyalkohol (DE 33 38 906).

Mit Hilfe dieser bekannten Systeme sind zwar Polyheteroaromat-Filme, insbesondere Polypyrrol-Filme, erhältlich, die eine gute Qualität und gute physikalische Eigenschaften aufweisen; die Filme sind glatt, biegsam, chemisch stabil und es werden elektrische Leitfähigkeiten von 1 bis über 400 S/cm für sie angegeben. Die Nacharbeitung der Verfahren hat jedoch ergeben, daß elektrische Leitfähigkeiten >30 S/cm nicht reproduzierbar sind (siehe Macromol. Chem. Rapid Commun. Loc. cit. Seite 158), sondern daß letztlich nur Polyheteroaromat-Filme erhältlich sind, deren Leitfähigkeit ≦ 30 S/cm ist. Außerdem weisen die Filme alle eine für die praktische Anwendung zu geringe Speicherkapazität/kg Film auf.

Überraschenderweise wurde gefunden, daß man bei der elektrochemischen Oxidation monomerer heteroaromatischer Verbindungen in Wasser, Tenside und organische mit Wasser mischbare Lösungsmittel (Cotenside) enthaltenden Systemen dann Polyaromat-Filme mit wesentlich verbesserten Eigenschaften erhält - ihre elektrische Leitfähigkeit ist zuverlässig reproduzierbar und beträgt mindestens 56 S/cm ihre Speicherkapazität ist um 30 % höher als die bislang erreichten Speicherkapazitäten - wenn man die anodische Oxydation in einem ein Leitfähigkeitsminimum aufweisenden Wasser, Sulfonsäuren und/oder Schwefelsäurehalbester, mehrwertige Alkohole und das Monomer enthaltenden Elektrolytsystem vornimmt.

Die Erfindung betrifft daher ein Verfahren zur Herstellung von elektrisch leitfähigen Polyheteroaromaten durch elektrochemische Oxidation von monomeren heteroaromatischen Verbindungen in Wasser, Tenside und/oder Cotenside enthaltenden Elektrolyt-Systemen unter Abscheidung der Polyheteroaromaten auf der Oberfläche der Anode, das dadurch gekennzeichnet ist, daß man ein aus monomerer Verbindung, Wasser, Sulfonsäure und/oder Schwefelsäurehalbester und mehrwertigem Alkohol bestehendes Elektrolytsystem verwendet, dessen elektrische Leitfähigkeit durch allmähliche Zugabe der monomeren Verbindung auf das Minimum eingestellt worden ist und worin die Konzentration des Gemischs aus Sulfonsäure und/oder Schwefelsäurehalbester und mehrwertigem Alkohol 5 - 60 Gew.-%, bezogen auf das Gesamtgewicht des Elektrolyten, beträgt und Sulfonsäure und/oder Schwefelsäurehalbester einerseits und mehrwertiger Alkohol andererseits in einem Molverhältnis von 1 : 5 - 25 stehen.

Die erfindungsgemäß für die elektrochemische Oxidation zu verwendenden Elektrolytsysteme werden dadurch erhalten, daß man die Wasser, mehrwertigen Alkohol, Sulfonsäure und/oder Schwefelsäurehalbester enthaltenden Gemische unter gleichzeitiger Bestimmung ihrer elektrischen Leitfähigkeit mit dem zu

oxidierenden Monomer versetzt, bis das Leitfähigkeitsminimum des betreffenden Gemisches erreicht ist. Es wurde festgestellt, daß die Leitfähigkeit der Wasser, mehrwertigen Alkohol und Sulfonsäure und/oder Schwefelsäurehalbester enthaltenden Gemische bei Zusatz der Monomere ein Leitfähigkeitsminimum durchlaufen. Elektrolytsysteme, die sich in diesem Leitfähigkeitsminimum befinden, liefern bei der anodischen Oxidation reproduzierbar Polyheteroaromat-Filme mit wesentlich verbesserten mechanischen und elektrischen Eigenschaften.

In dem erfindungsgemäßen Verfahren können als oxidativ polymerisierbare monomere heteroaromatische Verbindungen vor allem heteroaromatische Verbindungen mit 5- oder 6-gliedrigen Ringsystemen verwendet werden. Diese monomeren heteroaromatischen Verbindungen enthalten vorzugsweise 1 bis 3 Heteroatome, insbesondere N-, O- und/oder S-Atome, im Ringsystem und können an den Ring-Kohlenstoffatomen, beispielsweise durch Alkylgruppen, insbesondere mit 1 bis 6 C-Atomen, substituiert sein, wobei vorzugsweise mindestens zwei Ring-Kohlenstoffatome nicht substituiert sind, um die anodische Oxidation einfach und gut durchführen zu können. Beispiele für solche heteroaromatischen Verbindungen sind: Furan, Thiophen, Thiazol, Oxazol, Thiadiazol, Imidazol, Pyridin, 3,5-Dimethylpyridin, Pyrazin und 3,5-Dimethylpyrazin. Bevorzugt werden in dem erfindungsgemäßen Verfahren Pyrrole eingesetzt, insbesondere das unsubstituierte Pyrrol aber auch durch Alkylgruppen und Halogenatome substituierte Pyrrole wie 3,4-Dialkylpyrrole, z.B. 3,4-Dimethylpyrrol und 3,4-Diethylpyrrol sowie die 3,4-Dihalogenpyrrole, insbesondere 3,4-Dichlorpyrrol.

Als Vertreter der in den erfindungsgemäßen Elektrolytsystemen zu verwendenden Sulfonsäuren und Schwefelsäurehalbester seien beispielsweise genannt: Alkansulfonsäuren wie die Methan- und Trifluormethansulfonsäure und insbesondere $C_8$-$C_{18}$-Alkansulfonsäuren wie die Octansulfonsäure, die Perfluoroctansulfonsäure und die Dodecansulfonsäure; Aryl- und Alkylarylsulfonsäuren wie die Benzol-, Toluol-, Ethylbenzol-, Dodecylbenzol- und Naphthalinsulfonsäure.

Als Schwefelsäurehalbester seien vor allem der Schwefelsäureoctyl-, -decyl- und -dodecylester genannt.

Als Vertreter der in den erfindungsgemäßen Elektrolytsytemen zu verwendenden mehrwertigen Alkohole seien vorzugsweise Diole wie Ethylenglykol, Propylenglykol-1,3, Butandiol-1,4, Hexandiol-1,6, Diethylen- und Triethylenglykol; und Triole wie Glycerin und Hexantriol genannt.

Sulfonsäuren (Schwefelsäurehalbester) und mehrwertige Alkohole werden in einem solchen Molverhältnis eingesetzt, daß auf ein Mol Sulfonsäure (Schwefelsäurehalbester) 5 bis 25 Mol mehrwertiger Alkohol entfallen.

Die Konzentration der Gemische aus Sulfonsäure (Schwefelsäurehalbester) und mehrwertigem Alkohol in den erfindungsgemäß zu verwendenden wäßrigen Elektrolytsystemen beträgt 5 bis 60 Gew.-%, bezogen auf das Gesamtgewicht des Elektrolytsystems; vorzugsweise beträgt die Konzentration 10 bis 50 Gew.-%.

Die Mengen an monomerer heteroaromatischer Verbindung, die dem wäßrigen Gemisch aus Sulfonsäure (Schwefelsäurehalbester) und mehrwertigem Alkohol bis zum Erreichen des Leitfähigkeitsminimums zugesetzt werden können, betragen im allgemeinen 1 bis 15 Gew.-%, bezogen auf das Gesamtgewicht des wäßrigen Elektrolytsystems.

Das erfindungsgemäße Verfahren kann in den üblichen und an sich bekannten elektrolytischen Zellen oder Elektrolyse-Apparaturen durchgeführt werden. Gut geeignet sind beispielsweise einfache Elektrolyse-Apparaturen, bestehend aus einer Zelle ohne Diaphragma, zwei Elektroden und einer externen Stromquelle. Die Elektroden können dabei beispielsweise aus Graphit oder einem üblichen, inerten Elektrodenmaterial sein, insbesondere aus Edelmetall, wie Gold, Platin oder Palladium, Edelstahl, Nickel oder Titan. Da bei der elektrochemischen Polymerisation die monomeren heteroaromatischen Verbindungen anodisch oxidiert werden und sich die gebildeten Polymeren auf der Anode ablagern, sind für die Herstellung von Filmen aus den Poly(heteroaromaten) zumindest die Anode, insbesondere aber beide Elektroden, flächig ausgebildet. Die Größe der Anodenfläche entspricht dabei der Größe des resultierenden Polymerfilmes. Vorzugsweise sind die Flächen der beiden Elektroden parallel zueinander angeordnet.

Außer der erwähnten einfachen elektrolytischen Zelle ohne Diaphragma können auch andere Elektrolyseeinrichtungen für das erfindungsgemäße Verfahren Einsatz finden, beispielsweise Zellen mit Diaphragmen oder solche mit Referenzelektroden zur exakten Potentialbestimmung. Häufig ist eine Messung der Strommenge (A sec) zweckmäßig, da hierüber unter anderem die Schichtstärke der abgeschiedenen Filme kontrolliert werden kann.

Normalerweise wird das erfindungsgemäße Verfahren bei Raumtemperatur durchgeführt. Da sich die fleaktionstemperatur für die Polymerisation der heteroaromatischen Verbindungen als unkritisch erwiesen hat, kann die Temperatur jedoch in einem breiten Bereich variiert werden, solange die Erstarrungstemperatur bzw. Siedetemperatur des Elektrolyt-Lösungsmittels nicht unter- bzw. überschritten wird. Im allgemeinen hat sich eine Polymerisationstemperatur im Bereich von 0 bis 50 °C, insbesondere von +10 bis +30 °C, als sehr vorteilhaft erwiesen.

Als Stromquelle für den Betrieb der elektrolytischen Zelle, in der das erfindungsgemäße Verfahren durchgeführt wird, eignet sich jede Gleichstromquelle, wie z.B. eine Batterie, die eine hinreichend hohe elektrische Spannung liefert. Üblicherweise wird die erfindungsgemäße elektrochemische Polymerisation mit einer Spannung im Bereich von 1 bis 10 Volt, vorzugsweise im Bereich von 1,5 bis 4 Volt, betrieben. Die Höhe der gewählten Spannung hängt dabei unter anderem auch von dem Elektrodenabstand ab und ist umso höher, je größer dieser ist. Für die Stromdichte haben sich bei dem erfindungsgemäßen Verfahren Werte im Bereich von 0,05 bis 50 $mA/cm^2$ , vorzugsweise im Bereich von 1 bis 15 $mA/cm^2$ , als günstig und vorteilhaft erwiesen.

Die Dauer der Elektrolyse hängt unter anderem von dem verwendeten Elektrolyt-System, den jeweiligen Elektrolyse-Bedingungen sowie insbesondere auch von der gewünschten Filmdicke ab. Üblicherweise liegt die Elektrolysedauer im Bereich von einigen Minuten bis mehreren Stunden. So lassen sich beispielsweise ohne weiteres innerhalb einer viertel Stunde Filme von einigen µm Dicke, beispielsweise von 5 bis 10 µm Dicke erhalten; durch langsames Elektrolysieren, beispielsweise in einem Zeitraum von 2 bis 12 Stunden, lassen sich auch Filme einer Dicke im Bereich von 10 bis 100 µm herstellen.

Die während der Elektrolyse anodisch abgeschiedenen filmförmigen Poly(heteroaromaten) werden zur Entfernung von anhaftendem Leitsalz und/oder Emulgator mit Lösungsmitteln, vorzugsweise Wasser oder wäßrigen Lösungsmitteln, gewaschen und bei Temperaturen im Bereich von 25 bis 150 °C, vorzugsweise unter Vakuum, getrocknet. Bei Einsatz von Graphit-, Edelmetall-, Stahl-, Titan-, Nickel- oder ähnlichen Elektroden lassen sich danach die Filme der Poly(heteroaromaten) im allgemeinen leicht von der Elektrode ablösen, vor allem wenn Schichtstärken über 5 µm abgeschieden wurden. Die so erhaltenen Filme sind selbsttragend, stabil, haben gute mechanische Eigenschaften und Festigkeiten und eine gut ausgebildete, zusammenhängende Oberfläche.

Die erfindungsgemäß erhältlichen Polyheteroaromat-Filme unterscheiden sich von den nach dem Stand der Technik erhaltenen Polymerfilmen dadurch, daß in ihnen das Verhältnis Monomereinheiten/Anionen < 3:1 ist und daß sie kein organisches Lösungsmittel eingeschlossen enthalten. Infolge ihres höheren Anteils an positiv-geladenen N-Atomen weisen die erfindungsgemäß erhältlichen Polymer-Filme eine wesentlich höhere Ladungsdichte als die gemäß Stand der Technik erhältlichen Polymerfilme auf. Außerdem zeichnen sich die nach dem erfindungsgemäßen Verfahren erhältlichen Polymerfilme durch eine glattere Oberfläche und eine gleichmäßigere Schichtstruktur und infolgedessen durch eine verbesserte elektrische Leitfähigkeit aus.

Die erfindungsgemäß hergestellten Poly(heteroaromaten) haben sehr gute anwendungstechnische Eigenschaften und können in allen Bereichen eingesetzt werden, in denen auch die bisherigen Poly(heteroaromaten) Anwendung finden. Hierzu gehört beispielsweise der Einsatz zur Herstellung von Kondensatoren, elektrischen Schaltern, Halbleiter-Bauteilen, Elektroden, Abschirmmaterialien sowie zur antistatischen Ausrüstung von Kunststoffen.

Beispiel 1

Eine Mischung aus 50 g Wasser, 13,3 g Natrium-dodecylsulfat und 22,4 g Ethylenglykol wird durch Filtration über einen stark sauren Kationenaustauscher von den Natriumionen befreit. Das so erhaltene stark saure wäßrige Gemisch wird konduktometrisch mit destilliertem Pyrrol titriert, bis das Elektrolytsystem ein Leitfähigkeitsminimum aufweist (Verbrauch an Pyrrol bis zum Leitfähigkeitsminimum: 4,1 g).

Das so erhaltene Elektrolytsystem wird bei einer Stromdichte von 13 $mA/cm^2$ an einer goldbedampften Polycarbonatelektrode oxidiert. Der schwarze Polypyrrolfilm weist eine Dicke von 6 µm und eine gute mechanische Stabilität auf. Seine Oberfläche ist dicht und glänzend. Seine Bruttozusammensetzung (gemäß Verbrennungsanalyse) ist:

$$(C_4H_3N)_{2,15} \cdot C_{12}H_{25}\overset{\ominus}{S}O_4 \cdot H_2O;$$

seine (nach der van der Pauw-Methode gemessene) Leitfähigkeit beträgt 81 S/cm.

Ein in gleicher Weise aus 80,7 g Wasser, 6,7 g Toluolsulfonsäure, 33 g Glykol und 1,8 g Pyrrol hergestelltes Elektrolytsystem liefert unter den angegebenen Elektrolysebedingungen einen Polypyrrolfilm mit der spezifischen Leitfähigkeit von 56 S/cm und der Bruttozusammensetzung

$$(C_4H_3N)_{2,8}\cdot C_7H_5SO_3^{\ominus}\cdot H_2O.$$

Ein in gleicher Weise aus 400 g Wasser, 16,95 g Toluolsulfonsäure, 83,05 g Glykol und 6 g Pyrrol hergestelltes Elektrolytsystem liefert bei der Elektrolyse bei einer Stromdichte von 3,2 mA/cm$^2$ einen Polypyrrolfilm mit der spezifischen Leitfähigkeit von 90 S/cm und der Bruttozusammensetzung

$$(C_4H_3N)_{2,6}\cdot C_7H_5SO_3^{\ominus}\cdot 1,5\ H_2O.$$

Gleichwertige Polypyrrolfilme mit glatten glänzenden Oberflächen und vergleichbarer Leitfähigkeit wurden ebenfalls mit den in der nachstehenden Tabelle beschriebenen Elektrolytsystemen erhalten. Die Elektrolytsysteme wurden in der vorstehend beschriebenen Weise durch konduktometrische Titration der wäßrigen Säure/Alkohol-Gemische mit destilliertem Pyrrol hergestellt.

Tabelle

| S Sulfonsäure bzw. Schwefelsäurehalbester | A mehrwertiger Alkohol | Molverhältnis Säure/A | S/A-Gemisch [Gew.-%]* | Wasser [Gew.-%]* | Pyrrol [Gew.-%] |
|---|---|---|---|---|---|
| p-Toluolsulfonsäure | Ethylenglykol | 1:15 | 49,4 | 49,4 | 1,2 |
| " | " | 1:15 | 14,9 | 82 | 3,1 |
| " | Propandiol-1,3 | 1:10 | 48,5 | 50 | 1,5 |
| " | " | 1:10 | 14 | 81,4 | 4,6 |
| " | " | 1:25 | 48,5 | 50 | 1,5 |
| " | " | 1:25 | 14 | 82,5 | 3,5 |
| " | Butandiol-1,4 | 1:10 | 37 | 60 | 3 |
| " | " | 1:10 | 14 | 80,4 | 5,6 |
| Dodecylbenzolsulfonsäure | Ethylenglykol | 1:15 | 43 | 56 | 1 |
| " | " | 1:15 | 15 | 81 | 4 |

*Gew.-% bezogen auf das Gesamtgewicht des Elektrolytsystems

## Patentansprüche

1. Verfahren zur Herstellung von elektrisch leitfähigen Polyheteroaromaten durch elektrochemische Oxidation von monomeren heteroaromatischen Verbindungen in Wasser, Tenside und/oder Cotenside enthaltenden Elektrolyt-Systemen unter Abscheidung der Polyheteroaromaten auf der Oberfläche der Anode, dadurch gekennzeichnet, daß man ein aus monomerer Verbindung, Wasser, mehrwertigem Alkohol und Sulfonsäure und/oder Schwefelsäurehalbester bestehendes Elektrolytsystem verwendet, dessen elektrische Leitfähigkeit durch allmähliche Zugabe der monomeren Verbindung auf das Minimum eingestellt worden ist und worin die Konzentration des Gemischs aus Sulfonsäure und/oder Schwefelsäurehalbester und mehrwertigem Alkohol 5 - 60 Gew.-%, bezogen auf das Gesamtgewicht des Elektrolyten, beträgt und Sulfonsäure und/oder Schwefelsäurehalbester einerseits und mehrwertiger Alkohol andererseits in einem Molverhältnis von 1 : 5 - 25 stehen.

**2.** Verfahren nach Anspruch 1, dadurch gekennzeichnet, daß die Konzentration der monomeren heteroaromatischen Verbindung 1 bis 15 Gew.-% bezogen auf das Gesamtgewicht des Elektrolytsystems beträgt.

**3.** Verfahren nach Anspruch 1 oder 2, daß als mehrwertige Alkohole Diole und Triole verwendet werden.

## Claims

**1.** A method of preparing electrically conductive polyheteroaromatics by the electrochemical oxidation of monomeric aromatic compounds in electrolyte systems containing water, surfactants and/or cosurfactants, with deposition of the polyheteroaromatics on the surface of the anode, characterised in that an electrolyte system is used comprising a monomeric compound, water, a polyhydric alcohol and a sulphonic acid and/or a sulphuric acid half ester, the electrical conductivity of which is adjusted to a minimum by the gradual addition of the monomeric compound, and wherein the concentration of the mixture of sulphonic acid and/or sulphuric acid half ester and polydric alcohol is 5 - 60 weight % based on the total weight of electrolyte, and the sulphonic acid and/or sulphuric acid half ester on the one hand and the polyhydric alcohol on the other hand are in a mole ratio of 1 : 5 - 25.

**2.** A method according to claim 1, characterised in that the concentration of the monomeric heteroaromatic compound is 1 to 15 weight % based on the total weight of the electrolyte system.

**3.** A method according to claim 1 or 2, characterised in that diols and triols are used as polyhydric alcohols.

## Revendications

**1.** Procédé de préparation de polymères hétéroaromatiques conducteurs de l'électricité par oxydation électrochimique de composés hétéroaromatiques monomères dans des systèmes électrolytiques contenant de l'eau, des agents tensioactifs et/ou des agents tensioactifs auxiliaires avec dépôt des polymères hétéroaromatiques sur la surface de l'anode, caractérisé en ce que l'on utilise un système électrolytique constitué du composé monomère, d'eau, d'un polyalcool et d'un acide sulfonique et/ou d'un hémiester d'acide sulfurique, dont la conductibilité électrique a été réglée au minimum par addition progressive du composé monomère et dans lequel la concentration du mélange d'acide sulfonique et/ou d'hémiester d'acide sulfurique et du polyalcool est de 5 - 60 % en masse par rapport à la masse totale de l'électrolyte, et le rapport molaire de l'acide sulfonique et/ou de l'hémiester d'acide sulfurique d'une part et du polyalcool d'autre part est de 1 : 5-25.

**2.** Procédé selon la revendication 1, caractérisé en ce que la concentration du composé hétéroaromatique monomère est de 1 à 15 % en masse par rapport à la masse totale du système électrolytique.

**3.** Procédé selon la revendication 1 ou 2, caractérisé en ce que, comme polyalcools, on utilise des diols et des triols.